# EUROPÄISCHE PATENTANMELDUNG

(11) **EP 2 133 950 A1**
(43) Veröffentlichungstag der Anmeldung: **16.12.2009**
(21) Anmeldenummer: 09006368.6
(22) Anmeldetag: 12.05.2009
(51) Int. Cl.: H01M 8/02

(54) **Hochtemperatur-Brennstoffzellenstapel sowie dessen Herstellung**

(30) Priorität: 13.06.2008 DE 102008028368
(71) Anmelder: Forschungszentrum Jülich GmbH, 52425 Jülich (DE)
(72) Erfinder: Menzler, Norbert H., 52428 Jülich (DE); Herzhof, Werner, 52428 Jülich (DE); Buchkremer, Hans-Peter, 52525 Heinsberg (DE); Stöver, Detlev, 52382 Niederzier (DE)

(57) **Zusammenfassung**

Die Erfindung betrifft eine Dichtungsanordnung für den Einsatz in einer Hochtemperatur-Brennstoffzelle, umfassend einen Dichtungsgrundwerkstoff sowie eine Beschichtung aus Silber, Gold, Platin oder Palladium. Der Dichtungsgrundwerkstoff besteht vorteilhaft aus einem ferritischen Chromstahl, wie er auch sonst in Hochtemperatur-Brennstoffzellen eingesetzt wird, wie beispielsweise aus Crofer^{®} 22 APU, Crofer^{®} 22 H, ITM, ZMG^{®}232, RA446 oder anderen hochtemperaturstabilen Stählen. Die Beschichtung liegt vorteilhaft in einer Schichtdicke zwischen 1 und 100 µm, insbesondere in einer Schichtdicke zwischen 5 und 20 µm vor.

Durch diese nur Mikrometer dünne Beschichtung wird sichergestellt, dass der "effektive" thermische Ausdehnungskoeffizient der gesamten Dichtungsanordnung dem des Dichtungsgrundwerkstoffs sehr ähnlich ist. Auf diese Weise entspricht der thermische Ausdehnungskoeffizient gerade nicht dem der Beschichtung, welche üblicherweise nicht zu dem thermischen Ausdehnungskoeffizienten der zu verbindenden Teile passen. Ein Abplatzten der Beschichtung vom Dichtungsgrundwerkstoff oder das Entstehen von Relativbewegungen kann so weitgehend verhindert werden. Die Dichtungsanordnung weist einen effektiven thermischen Ausdehnungskoeffizienten zwischen 11 x 10⁻⁶ 1/K und 14 x 10⁻⁶ 1/K, vorteilhaft zwischen 11,5 × 10⁻⁶ 1/K und 12,5 x 10⁻⁶ 1/K auf.

Das erfindungsgemäße Verfahren zur Herstellung der oben genannten Dichtungsanordnung umfasst die Schritte: Herstellung der Form der Dichtung aus einem Dichtungsgrundwerkstoff sowie Beschichten der Form mit Silber, Gold, Platin oder Palladium.

## Beschreibung

Die Erfindung betrifft ein Hochtemperatur-Brennstoffzellensystem, insbesondere ein Brennstoffzellensystem mit oxidkeramischen Elektrolyten (SOFC = Solid Oxid Fuel Cell) sowie ein Verfahren zu dessen Herstellung.

### Stand der Technik

Brennstoffzellen sind elektrische Stromquellen, in denen durch elektrochemische Oxidation einer leicht oxidierbaren Substanz, meist Wasserstoff mit Sauerstoff, chemische Energie in elektrische Energie umgewandelt wird. Aufgrund der geringen Spannung, die eine einzelne Brennstoffzelle liefert, werden in der Regel viele Brennstoffzellen über so genannte Interkonnektoren zur Steigerung der elektrischen Leistung in Reihe geschaltet und dabei elektrisch isolierend verbunden und z. B. mit Glaskeramiklot abgedichtet (Brennstoffzellenstapel). Die einzelnen Zellebenen, das heißt die keramischen Zellen mit dem metallischen Interkonnektor, werden auch Kassetten genannt.

Die Betriebstemperatur eines SOFC - Stacks liegt im Bereich von 700 bis 900 °C. Ein Hochtemperatur-Brennstoffzellenstapel (SOFC - Stack) mit planaren Brennstoffzellen besteht üblicherweise aus keramischen Zellen und metallischen Interkonnektoren. Die keramische Zelle ist dabei in einem metallischen Rahmen eingebaut, der wiederum mit dem Interkonnektor verbunden ist.

Die keramische Zelle besteht in der Regel aus einem Nickelcermet (Hauptanteil Zirkoniumdioxid mit Nebenanteil Nickeloxid bzw. Nickel) und hat eine relativ gleichmäßige relative Wärmedehnung im Temperaturbereich von RT bis 1000 °C, d. h. einen temperaturunabhängigen thermischen Ausdehnungskoeffizienten von α = 12 x 10⁻⁶ K⁻¹. Der metallische Interkonnektor besteht aus dem ferritischem Chromstahl (Fe mit ca. 22 % Cr und weiteren Legierungsanteilen sowie Spurenelementen) und hat eine mit der Temperatur zunehmende relative Wärmedehnung. Der Ausdehnungskoeffizient steigt von α = 11 x 10⁻⁶ K⁻¹ bei tiefen Temperaturen auf α = 14 x 10⁻⁶ K⁻¹ bei 1000 °C.
Beim Zusammenbau werden sowohl die einzelnen Bauteile eines Hochtemperatur-Brennstoffzellenstapels, wie beispielsweise die Gasverteiler-, Boden oder Deckplatten, untereinander dauerhaft gasdicht gegeneinander abgedichtet, als auch der Stack gegenüber weiteren Peripheriegeräten, wie beispielsweise einem Wärmetauscher oder einem Reformer.

Für die weitere Entwicklung im Bereich der Hochtemperatur-Brennstoffzelle werden daher Dichtungsmaterialien benötigt, die in einem weiten Bereich des Sauerstoffpartialdrucks stabil sind, mit den übrigen Komponenten der Brennstoffzelle chemisch kompatibel sind und zudem zu minimalen thermischen Spannungen während des Betriebs der Hochtemperatur-Brennstoffzelle führen. Derzeit werden sowohl starre als auch zusammenpressbare (kompressible) Dichtungen für die SOFC entwickelt [4].

Der große Vorteil von zusammenpressbaren Dichtungen ist, dass sie nicht starr mit den übrigen Bauteilen verbunden werden, und somit einen genaue Anpassung der jeweiligen thermischen Ausdehnungskoeffizienten nicht zwingend notwendig ist. Allerdings benötigen diese Dichtungen zur Aufrechterhaltung der Gasdichtigkeit einen permanenten, hohen Anpressdruck (Dichtkraft).

Bislang wurden im Bereich der Hochtemperatur-Brennstoffzelle metallische, meist nicht oxidierbare Dichtungen aus Gold oder Silber oder auch Dichtungen in Form von Wellen oder C-Formen aus Superlegierungen für zusammenpressbare Dichtungen verwendet.

Aus [1] und [2] sind Untersuchungen bekannt, die die Eignung anderer Werkstoffe, wie beispielsweise keramische Fasermatten und Metalle in oder Kombinationen dieser Materialien als Hochtemperatur-Brennstoffzellen-Dichtungen zum Thema haben. Die Dichtungen liegen dabei als geprägte Metallfolien oder auch in Ringform (als E-, C- oder O-Ring) vor. Es wurde herausgefunden, dass auch diese Werkstoffe eine permanente Dichtkraft benötigen, und dass sie zudem einen hohen thermischen Ausdehnungskoeffizienten im Bereich von 14 - 17 _{*} 10⁻⁶ 1/K aufweisen.
Untersucht wurden dabei insbesondere hochwarmfeste Ni-Cr-Legierungen, wie beispielsweise Nicrofer^{®}-Legierungen der Fa. ThyssenKrupp VDM GmbH, Inconel^{®}-Legierungen der Fa. Special Metals, oder auch Aluchrom YHf^{®} der Fa. ThyssenKrupp VDM GmbH.
Als weitere Beispiele der Gruppe der kompressiblen Dichtungen sind solche zu nennen, die Glimmer umfassen. Dabei existieren sowohl Ausführungsbeispiele, bei denen der Glimmer zusätzlich noch infiltriert wird, als auch Ausführungsformen, bei denen zusätzliche Fügeschichten aus Silber oder Glaslot zur verbesserten Dichtigkeit beitragen.

Glimmerdichtungen eignen sich jedoch nicht, wenn auf hohe, dauerhafte Gasdichtigkeit besonderer Wert gelegt wird, da sie prinzipiell nicht absolut gasdicht ausgebildet werden können. Als gasdicht wird eine Leckrate bezogen auf die Dichtungsfläche von mindestens 10⁻⁴ Pa 1 / (cm² s) angesehen. Diese Leckrate ist mit Glimmerdichtungen nicht erfüllbar. Gase können daher grundsätzlich austreten, was beim Einsatz einer Hochtemperatur-Brennstoffzelle zu einer Vermischung von Brenngas und Luft und somit zu einer erhöhten Brandgefahr führt. Zudem hat sich herausgestellt, dass diese Undichtigkeit nachteilig zu einer Ablagerung von Cr₂O₃ führen kann. Sowohl Glimmer-Dichtungen als auch Glaslotdichtungen benötigen darüber hinaus eine permanente Dichtkraft [1]. Außerdem sind die für Glimmerdichtungen notwendigen permanenten Dichtkräfte in der Regel für Brennstoffzellenstapel zu hoch (insbesondere bei Betriebstemperatur).

Starre Dichtungen auf der anderen Seite benötigen diese permanente Dichtkraft vorteilhaft nicht. Allerdings weisen sie hohe Anforderungen an die Haftung, die Rissbildung sowie an angepasste thermische Ausdehnungskoeffizienten auf.

Bekannte starre Abdichtungen im Bereich der Hochtemperatur-Brennstoffzelle bestehen aus einem Glas und/oder einer Glaskeramik. Insbesondere bariumhaltige Glaskeramikmaterialien scheinen dabei sehr Erfolg versprechend.

Glaslote können in der Regel in ihren Ausdehnungskoeffizienten nicht exakt mit dem Ausdehnungskoeffizienten des Stahls der metallischen Elemente des Brennstoffzellenstapels in Übereinstimmung gebracht werden. Beim Einsatz von Glasloten entstehen zudem nicht zerstörungsfrei lösbare Verbindungen. Eine nachträgliche Montage, bzw. Demontage, wie beispielsweise beim Ausbau von defekten Einzelteilen ist somit nicht möglich, da zwischen Glaskeramiklot und Oxidschichten Interdiffusionsschichten ausgebildet werden, die durch eine Demontage zerstört werden würden, für die Leckdichtigkeit und Haftfestigkeit aber notwendig sind.

Alternativ wurde Silber in Form von Silberringen oder Silber-Flachdichtungen eingesetzt. Dies war besonders vorteilhaft in den Bereichen, in denen eine elektrische Isolierung nicht gefordert war. Silberdichtungen haben jedoch ebenfalls den Nachteil, dass der thermische Ausdehnungskoeffizient der Dichtung in der Regel deutlich über denen der zu verbindenden Teile liegt. So weist beispielsweise der metallische Werkstoff Crofer 22APU^{®} der Fa. ThyssenKrupp VDM GmbH eine thermische Dehnung von ca. 12,5 * 10⁻⁶ 1/K und der typische SOFC-Elektrolyt aus 8 YSZ eine thermische Dehnung von ca. 10,5 * 10⁻⁶ 1/K auf, während die thermische Ausdehnung von Silber bei ca. 19 * 10⁻⁶ 1/K liegt. Bei der Thermozyklierung der Komponenten des Brennstoffzellenstapels kommt es daher regelmäßig zu Relativbewegungen, insbesondere in x-y-Richtung, die dazu führen können, dass der Verbund Silber/Metallkomponente nachteilig reißt und somit undicht wird [3].

In der Anmeldung zitierte Literatur:
[1] Martin Bram, Stephan Reckers, Pere Drinovac, Josef Mönch, Rolf W. Steinbrech, Hans Peter Buchkremer and Detlev Stöver; Deformation behavior and leakage tests of alternate sealing materials for SOFC stacks, Journal of Power Sources, Band 138, Issues 1-2, 15 November 2004, Seiten 111-119.
[2] M. Bram, S. E. Brunings, F. Meschke, W. A. Meulenberg, H. P. Buchkremer, R. W. Steinbrech, D. Stover; Application of Metallic Gaskets in SOFC Stacks, SOFC-VII, Electrochemical Society Inc., Pennington, New Jersey, 2001, Seiten 875-883.
[3] M. Bram, S. Reckers, P. Drinovac, S. E. Brünings, R. W. Steinbrech, H. P. Buchkremer and D. Stöver; Basic investigations on metallic and composite gaskets for an application in SOFC stacks, In: J. Huijsmans, Editors, Proceedings of the fifth European Solid Oxide Fuel Cell Forum, 1.- 5. Juli 2002 Lucerne, Schweiz (2002), Seiten 847-854.
[4] J. W. Fergus; Sealants for solid oxide fuel cells, Journal of Power Sources, Band 147 (2005), Seiten 46-57.

### Aufgabe und Lösung

Der Erfindung liegt die Aufgabe zugrunde, eine Dichtung für eine Hochtemperatur-Brennstoffzelle zur Verfügung zu stellen, welche einerseits beständig und gasdicht, andererseits aber auch kostengünstig ist.

Darüber hinaus ist es die Aufgabe der Erfindung, ein Verfahren zur Herstellung der vorgenannten Dichtung bereit zu stellen.

Die Aufgaben der Erfindung werden gelöst durch eine Dichtung für eine Hochtemperatur-Brennstoffzelle gemäß Hauptanspruch, sowie durch ein Verfahren zur Herstellung einer solchen Dichtung gemäß Nebenanspruch. Vorteilhafte Ausgestaltungen des Verfahrens sowie der Dichtung ergeben sich aus den jeweils rückbezogenen Ansprüchen.

### Gegenstand der Erfindung

Der Grundgedanke der Erfindung besteht darin, für eine Dichtung für eine Hochtemperatur-Brennstoffzelle auf ein Material zurückzugreifen, welches schon für andere Bauteile einer Hochtemperatur-Brennstoffzelle verwendet wird. Ein solches Material ist beispielsweise ein hochfester, ferritischer Chromstahl, wie er für die Herstellung von Interkonnektoren eingesetzt wird, insbesondere ein Dichtungsgrundwerkstoff wie z. B. Crofer^{®} 22 APU oder Crofer^{®} 22 H der Fa. ThyssenKrupp VDM GmbH, ITM der Fa. Plansee, ZMG^{®} 232 der Fa. Hitachi Metals Ltd. oder RA 446 der Fa. Rolled Alloys.

Die erfindungsgemäße Dichtung weist dabei vorteilhaft die Form einer Flach- oder Runddichtung auf, kann aber ebenso in einer Kombination sowie in einer Abwandlung davon auftreten. Typische Beispiele einer solchen Dichtungsform wären beispielsweise Runddraht, Ellipsoiddraht oder auch gestanzte oder geprägte Bleche.

Um eine Oxidation des Dichtungsmaterials an der Oberfläche zu vermeiden, wird das Material für die Dichtung (Dichtungsgrundwerkstoff) nach der Formgebung mit einem zweiten Material (Beschichtung) beaufschlagt, welches eine Oxidation des Dichtungsgrundwerkstoffs regelmäßig verhindert. Ein für die Beschichtung besonders geeignetes Material ist beispielsweise Silber, Gold, Platin oder Palladium. Als Aufbringungsmethode für die Beschichtung haben sich die Galvanisierung oder die Elektrophorese als günstig herausgestellt. Die Beschichtung wird vorteilhaft in nur sehr geringer Schichtdicke auf den Dichtungsgrundwerkstoff aufgebracht, insbesondere nur in Schichtdicken zwischen 1 und 100 µm, besonders vorteilhaft nur in Schichtdicken zwischen 5 und 20 µm. Durch diese nur Mikrometer dünne Beschichtung wird sichergestellt, dass der "effektive" thermische Ausdehnungskoeffizient der gesamten Dichtungsanordnung dem des Dichtungsgrundwerkstoffs sehr ähnlich ist. Auf diese Weise entspricht der thermische Ausdehnungskoeffizient gerade nicht dem des reinen Beschichtungsmaterials, wie z. B. dem von Silber, welches wie vorgenannt üblicherweise nicht zu dem thermischen Ausdehnungskoeffizienten der zu verbindenden Teile passt. Ein Abplatzten der Beschichtung vom Dichtungsgrundwerkstoff oder das Entstehen von Relativbewegungen kann so weitgehend verhindert werden.

Anzustreben ist ein "effektiver" thermischer Dehnungskoeffizient, der leicht höher als jener der Zelle ist, um in der Zelle keine Zug-, sondern Druckspannungen beim Abkühlen zu induzieren. Bei einem Verbund aus beispielsweise 1 mm dicker Crofer^{®} 22 APU-Dichtung mit einer 1 µm dicken Silberschicht würde bei einer Messung der thermischen Dehnung exakt der des Grundwerkstoffs gemessen werden, da der Grundwerkstoff in Masse und Volumen den Beschichtungswerkstoff deutlich dominiert.

Die Verwendung von Silber als Beschichtungsmaterial kann, ähnlich wie beim Einsatz von Silberdraht, zu einer Art Diffusionsverschweißung mit dem metallischen Dichtungsgrundwerkstoff führen. Dadurch entsteht regelmäßig eine besonders gute Verbindung zwischen Grundwerkstoff und Beschichtung der Dichtungsanordnung. Weiterhin von Vorteil ist, dass das "Silberreservoir" gering ist, und damit eine massive Veränderung des Grundwerkstoffs, zum Beispiel Crofer^{®} 22 APU, durch eine Eindiffusion des Silbers vermindert ist. Eine derartige Veränderung könnte beispielsweise eine Änderung der mechanischen Eigenschaften durch eine so genannte "Austenitisierung" sein.

Eine dünne Beschichtung mit Silber weist darüber hinaus zusätzlich den Vorteil auf, dass die kompressible Eigenschaft des Silbers auf Grund seiner Duktilität zumindest teilweise erhalten bleibt. Trotz der eigentlich starren Anordnung weist die erfindungsgemäße Dichtungsanordnung damit zumindest teilweise auch einen flexiblen Charakter auf, was vorteilhaft dazu führt, dass die benötigte permanente Dichtkraft moderat ausfällt.

Ein weiterer Vorteil der erfindungsgemäßen Dichtungsanordnung ist der relativ geringe Preis verglichen mit dem einer reinen Silberdichtung aus dem Stand der Technik.

Bei dem Verfahren zur Herstellung der erfindungsgemäßen Dichtungsanordnung wird zunächst die gewünschte Form der Dichtung aus dem Grundwerkstoff erzeugt. Dies kann beispielsweise durch Stanzen oder Prägen der gewünschten Form aus einem Blech des Grundwerkstoffs erfolgen. Es können auch Drähte aus dem Grundwerkstoff gezogen und nachbearbeitet, beispielsweise abgelängt oder geformt werden.

In einem zweiten Schritt erfolgt anschließend die Beschichtung des Grundwerkstoffs mit Silber, Gold, Platin oder Palladium. Es hat sich als vorteilhaft herausgestellt, wenn diese Beschichtung mit Ag, Au, Pt oder Pd beispielsweise über ein galvanisches Verfahren oder eine stromlose Beschichtung aus entsprechender Lösung erfolgt.

Die dabei erzielen Schichtdicken der Beschichtung liegen regelmäßig zwischen 1 und 100 µm, und vorteilhaft zwischen 5 und 20 µm. Die abgeschiedenen Schichtdicken werden dabei so gewählt, dass zwar die Oxidationsbeständigkeit der Dichtungsanordnung sichergestellt werden kann, aber gleichzeitig der effektive thermische Ausdehnungskoeffizient der gesamten Dichtungsanordnung nicht zu stark von dem des Grundwerkstoffs, bzw. von denen der zu verbindenden Bauteile abweicht, um Risse oder Abplatzungen regelmäßig zu vermeiden.

### Spezieller Beschreibungsteil

Für den nicht isolierenden Teil der Dichtung im SOFC-Stack sind Metalle aufgrund ihrer Kostengünstigkeit von Vorteil. Insbesondere als dafür geeignete Werkstoff sind zu nennen die Hochtemperaturlegierungen, wie beispielsweise Crofer^{®} 22 APU und Crofer^{®} 22 H, ITM, ZMG^{®} 23 oder RA 446, sowie ferner alle hoch-Cr-haltigen hochtemperaturstabilen Stähle. Theoretisch kommen auch Nickelbasislegierungen infrage, diese sind jedoch in der Regel deutlich teurer. Keramische Faserwerkstoffe sind nur dann zu verwenden, wenn deren thermische Dehnung angepasst ist (z. B. Fasern aus stabilisiertem Zirkoniumdioxid). Werkstoffe mit zu hoher thermischer Fehlpassung sind regelmäßig nicht verwendbar. Hier gilt eine analoge Aussage wie zu den reinen Silberdichtungen.

Die Dicke des Grundwerkstoffs sollte im Bereich 200 bis 2000 µm liegen, vorteilhaft zwischen 500 und 1000 µm. Für die Dicke der Beschichtung haben sich Schichtdicken zwischen 1 und 100 µm, vorteilhaft zwischen 5 und 20 µm herausgestellt.

| | | |
|---|---|---|
| Crofer^{®} 22 APU | W.-Nr. 1.4760 | ThyssenKrupp VDM GmbH |
| Crofer^{®} 22 H | W.-Nr. 1.4750 | ThyssenKrupp VDM GmbH |
| ITM | | Plansee AG |
| ZMG^{®} 232L | | Hitachi Metals Ltd. |
| RA 446 | W.-Nr. 1.4763 | Rolled Alloys |

## Patentansprüche

1. Dichtungsanordnung für den Einsatz in einer Hochtemperatur-Brennstoffzelle, umfassend einen Dichtungsgrundwerkstoff aus einem hochtemperaturstabilen Chromstahl sowie eine Beschichtung aus Silber, Gold, Platin oder Palladium.

2. Dichtungsanordnung nach Anspruch 1, in Form einer Flach- oder Runddichtung.

3. Dichtungsanordnung nach einem der Ansprüche 1 oder 2, umfassend einen Dichtungsgrundwerkstoff aus ferritischem Chromstahl.

4. Dichtungsanordnung nach Anspruch 1 bis 3, mit Crofer^{®} 22 APU, Crofer^{®} 22 H, ITM, ZMG^{®}232 oder RA446 als Dichtungsgrundwerkstoff.

5. Dichtungsanordnung nach einem der Ansprüche 1 bis 4, bei dem die Beschichtung eine Schichtdicke zwischen 1 und 100 µm aufweist, insbesondere eine Schichtdicke zwischen 5 und 20 µm.

6. Dichtungsanordnung nach einem der Ansprüche 1 bis 5, bei dem der Dichtungsgrundwerkstoff eine Schichtdicke zwischen 200 bis 2000 µm aufweist, vorteilhaft zwischen 500 und 1000 µm.

7. Dichtungsanordnung nach einem der Ansprüche 1 bis 6, mit einem effektiven thermischen Ausdehnungskoeffizienten zwischen 11 x 10⁻⁶ 1/K und 14 x 10⁻⁶ 1/K, vorteilhaft zwischen 11,5 x 10⁻⁶ 1/K und 12,5 x 10⁻⁶ 1/K.

8. Verfahren zur Herstellung einer Dichtungsanordnung nach einem der Ansprüche 1 bis 7, mit den Schritten
- Herstellung der Form der Dichtung aus einem Dichtungsgrundwerkstoff aus einem hochtemperaturstabilen Stahl,
- Beschichten der Form mit Silber, Gold, Platin oder Palladium.

9. Verfahren nach Anspruch 8, bei dem die Form der Dichtungsanordnung durch Galvanotechnik oder stromlose Beschichtung erfolgt.

10. Verfahren nach Anspruch 8 oder 9, bei dem die Beschichtung durch eine galvanische Abscheidung erfolgt.

11. Verfahren nach Anspruch 8 bis 10, bei dem die Beschichtung in einer Schichtdicke zwischen 1 und 100 µm, insbesondere in einer Schichtdicke zwischen 5 und 20 µm erfolgt.
